# EUROPÄISCHE PATENTSCHRIFT

(11) **EP 1 178 087 B1**
(45) Veröffentlichungstag und Bekanntmachung des Hinweises auf die Patenterteilung: **02.11.2006**
(21) Anmeldenummer: 01111615.9
(22) Anmeldetag: 12.05.2001
(51) Int. Cl.: C09D 5/18, C10M 111/04, C08K 3/04, C08K 3/38, C09K 3/10, F16J 15/08

(54) **Verwendung einer Beschichtemasse zur Herstellung hochtemperaturfester Dichtungselemente**
Use of a coating material for making refractory sealing elements
Utilisation d'une matière de revêtement pour la production d'éléments d'étanchéité resistants aux hautes températures

(30) Priorität: 04.08.2000 DE 10037965
(43) Veröffentlichungstag der Anmeldung: 06.02.2002
(73) Patentinhaber: ElringKlinger AG, 72581 Dettingen (DE)
(72) Erfinder: Zerfass, Hans-Rainer, Dr., 65232 Taunusstein (DE)
(74) Vertreter: Wössner, Gottfried

(56) Entgegenhaltungen:
- EP-A- 0 531 867
- EP-A- 0 976 795
- EP-A- 1 055 714
- DE-A- 3 802 090
- GB-A- 1 406 321
- US-A- 4 508 777
- PATENT ABSTRACTS OF JAPAN vol. 1999, no. 01, 29. Januar 1999 (1999-01-29) & JP 10 288259 A (ISHINO GASKET KOGYO KK;NIPPON KOKUEN KOGYO KK), 27. Oktober 1998 (1998-10-27)
- DATABASE WPI Section Ch, Week 198415 Derwent Publications Ltd., London, GB; Class A32, AN 1984-092234 XP002232240 & JP 59 039537 A (NIPPON VALQUA IND LTD), 3. März 1984 (1984-03-03)

## Beschreibung

Die Erfindung betrifft die Verwendung einer Beschichtemasse zur Herstellung hochtemperaturfester Dichtungselemente, insbesondere auf metallischen Oberflächen.

An die Gasdichtigkeit des Abgasstrangs von modernen Verbrennungsmotoren werden hohe Anforderungen gestellt, dies insbesondere bei der Steuerung der Verbrennung mittels so genannter Lambda-Sonden. Aufgrund der auftretenden Temperaturen im Bereich von 700-900° C sind hochtemperaturbeständige Dichtungen erforderlich.

Die Dichtigkeit wird naturgemäß sowohl von der Rauigkeit der Bauteiloberflächen als auch von der Anpassungsfähigkeit der Oberflächen der Dichtungsmaterialien beeinflusst. Im Abgasbereich können unter anderem Metalldichtungen mit eingeprägten Sicken zur Abdichtung verwendet werden.

Wie sich in der Praxis allerdings herausstellt, sind mit solchen Dichtungen die gewünschten niedrigen Leckageraten nicht realisierbar. Zur Erhöhung der Dichtigkeit von metallischen Flachdichtungen werden diese üblicherweise mit Elastomerbeschichtungen versehen. Die Elastomerbeschichtungen sind jedoch für den hier vorliegenden Anwendungsfall hoher Temperaturen nicht ausreichend beständig.

In den Offenlegungsschriften DE 38 02 090 A1 und JP 10-288259 sind beispielsweise Dichtungsmaterialien beschrieben, die aus einer Beschichtemasse, umfassend Nitrilkautschuk als Elastomer, Graphitpulver und ein geeignetes Lösungsmittel, hergestellt sind.

Ebenso wurden Dichtungsmaterialien beschrieben, bei denen als Bindemittel anstelle von Kautschuk Kunstharze auf Basis von Polyamiden oder Polyimiden zum Einsatz kommen (siehe z.B. die britische Patentschrift 1 406 321 sowie die Veröffentlichungen EP 0 976 795 A2 und EP 0 531 867 A1).

In der Offenlegungsschrift EP 1 055 714 A1 (Artikel 54(3) EPÜ) wird eine feuerfeste Farbe mit einer ähnlichen Zusammensetzung offenbart, umfassend Butyl- oder Isobutylenkautschuk, einen anorganischen Füllstoff sowie ein organisches Lösungsmittel.

Aufgabe der vorliegenden Erfindung ist es, eine Beschichtemasse vorzuschlagen, mit der hochtemperaturbeständige Dichtungselemente, insbesondere in Form von Beschichtungen von Metalloberflächen, hergestellt werden können.

Diese Aufgabe wird bei der eingangs beschriebenen Verwendung erfindungsgemäß dadurch gelöst, dass die Beschichtemasse ein einen Film bildendes Bindemittel, ein Lösemittel hierfür und einen hochtemperaturfesten Festschmierstoff umfasst, wobei das Bindemittel in einem späteren Schritt thermisch zersetzt wird. Überraschenderweise verliert die Beschichtung ihre Dichtungswirkung auch durch das Ausbrennen oder thermische Zersetzen des Bindemittels nicht.

Die Erfindung wird durch die Ansprüche 1-12 und 13-23 definiert.

Hochtemperaturfeste Festschmierstoffe sind zwar bislang schon im Zusammenhang mit Beschichtungszusammensetzungen, insbesondere auch für Metalllagendichtungen, eingesetzt worden (vgl. z.B. DE 198 33 063 A1). Jedoch werden dort die letztlich abdichtenden Beschichtungen stets in einer Mischung von Festschmierstoffen und Bindemitteln eingesetzt. Die hierbei bevorzugt eingesetzten siliconhaltigen Bindemittel bergen in sich den Nachteil, dass diese bei Betriebstemperaturen von 700 °C und mehr Siliciumdioxid bilden, welches die durch den weichen Festschmierstoff gegebene Anpassungsfähigkeit der Beschichtungszusammensetzung beeinträchtigt.

Im vorliegenden Fall wird im Gegensatz dazu das verwendete Bindemittel nur als Transportmedium verwendet, um die Pestschmierstoffe bis zum Einbau der Dichtung an ihrem Einsatzort an Ort und Stelle zu halten. Das Bindemittel selbst muss keine besondere Temperaturbeständigkeit aufweisen, sondern wird im Gegenteil bevorzugt so gewählt, dass dieses bei den Einsatztemperaturen von 700° C und mehr sich thermisch zersetzt und somit lediglich noch die Festschmierstoffe zurücklässt. Die Lösemittel für das Bindemittel sind bereits beim Auftrocknen der Beschichtemasse auf der Metalloberfläche durch Trocknen entfernt worden.

Geeignete Festschmierstoffe sind beispielsweise Graphit, Bornitrid oder Mischungen aus diesen Stoffen.

Der Festschmierstoff wird bevorzugt in Partikelform vorliegen, insbesondere in granularer oder lamellarer Form, und die Festschmierstoffpartikel weisen bevorzugt eine mittlere Partikelgröße von 0,5 bis 15 µm auf.

Die erfindungsgemäßen Beschichtemassen beinhalten bevorzugt im Hinblick auf deren bloße Trägerfunktion Bindemittel mit einem Anteil von 50 Gew. % oder weniger.

Vorzugsweise beträgt der Anteil an Bindemittel 50 Gew.% oder weniger der wenigerder Feststoffanteile.

Für das Massenverhältnis der Anteile von Festschmierstoff und Bindemittel gilt bevorzugt der Bereich von 1:1 bis 3:1.

Bevorzugt wird das Bindemittel so ausgewählt, dass es beim Trocknen der Beschichtemasse einen elastischen Film bildenden Lack umfasst.

Der Lösemittelanteil der erfindungsgemäßen Beschichtungsmassen beträgt bevorzugt 30 Gew. % oder mehr. Das Lösemittel ist ein wichtiger Bestandteil der erfindungsgemäßen Beschichtemasse (im Gegensatz zur DE 198 33 063, die lösemittelfrei arbeitet) und sorgt vor allem für die Möglichkeit, die Beschichtemasse möglichst dünn auf die zu beschichtenden Metalloberflächen aufzutragen. So eignet sich die erfindungsgemäße Beschichtemasse nicht nur zur bereichsweisen Beschichtung, sondern ebenso zur vollflächigen Beschichtung der Metalllagen einer Dichtung.

Bevorzugte Beschichtemassen weisen zusätzlich einen Anteil an einem Elastomeren auf, durch den die mechanische Unempfindlichkeit der Beschichtung bis zum Einbau der Dichtungslagen an dem vorgesehenen Einsatzort gewährleistet wird.

Der Elastomeranteil der Beschichtemasse beträgt vorzugsweise 5 bis 15 Gew. %, bezogen auf die Summe der Anteile von Bindemittel und Festschmierstoff.

Erfindungsgemäß werden die zuvor beschriebenen Beschichtemassen zur Herstellung von Dichtungselementen auf Oberflächen von Metallblechen, insbesondere in Form von sehr dünnen Beschichtungen, verwendet.

Die Erfindung betrifft ferner die Verwendung der Beschichtemasse zur Herstellung von Dichtungselementen auf Metallblechen, wobei die Metallbleche nachfolgend zur Herstellung der Dichtungselemente punktgeschweißt werden können.

Überraschenderweise stört die Beschichtung mit der Beschichtemasse das Punktschweißen nicht, so dass weitere Elemente der Dichtungen unabhängig von der vorhandenen oder nicht vorhandenen Beschichtung mit erfindungsgemäßer Beschichtemasse punktgeschweißt werden können.

Die Erfindung betrifft ferner ein- oder mehrlagige Metalllagendichtungen mit einem oder mehreren Dichtungselementen, welche auf einer der Oberflächen einer der Metalllagen aus einer der zuvor beschriebenen Beschichtemasse hergestellt sind. Solche Metalllagendichtungen weisen auch beim Einsatz bei hohen Temperaturen sehr niedrige Leckageraten auf, wobei ein Bindemittel verwendet wird bzw. in einem Temperaturbereich gearbeitet wird, in dem das Bindemittel thermisch zersetzt wird und letztlich nur noch die temperaturbeständigen Festschmierstoffe auf der Metalloberfläche verbleiben.

Bei der erfindungsgemäßen Beschichtemasse werden bevorzugt weiche Festschmierstoffe verwendet, und Beispiele hierfür sind bereits zuvor in Form von Graphit und Bornitrid genannt. Diese sind besonders gut geeignet, die Rauigkeit der Metalloberfläche auszufüllen und diese zu mindern.

Da das Bindemittel im Wesentlichen ohne Einfluss auf die Dichtigkeit ist und thermisch zersetzt und somit aus der Beschichtung entfernt werden kann, kann es so gewählt werden, dass eine möglichst gute Verarbeitbarkeit der Beschichtungmasse bei der Produktion der Dichtungen erreicht wird.

Als Bindemittel eignen sich eine Vielzahl von Lacken, die elastische Filme bilden. Die thermische Zersetzung der Bindemittel findet normalerweise während der ersten Betriebsstunden der eingebauten Dichtung in dem Abgasstrang statt.

Diese und weitere Vorteile der Erfindung werden im Folgenden anhand von Beispielen noch näher erläutert.

### Beispiele

In der folgenden Tabelle werden 3 verschiedene Beispielrezepturen angegeben, wobei die Angaben zu den Anteilen der verschiedenen Bestandteile der Beschichtemassen jeweils Gewichtsteile sind. Der Lösemittelanteil an der Rezeptur wird in Gew. % angegeben, bezogen auf die Gesamtrezeptur.

Als Lösemittel eignen sich Ester, wie z.B. n-Butylacetat, 2-Methoxy-1-methylethylacetat oder auch Ketone, wie z.B. Methylethylketon oder Mischungen aus diesen Lösemitteln.

Bei den in den Beispielen verwendeten Festschmierstoffen liegen die Teilchengrößen beim Bornitrid im Bereich von 1-5 µm und beim Graphit im Bereich von 3-8 µm.

| Rohstoff | Rezeptur 1 | Rezeptur 2 | Rezeptur 3 |
|---|---|---|---|
| | Massenteile | Massenteile | Massenteile |
| Epoxidharz | 1,62 | 0,90 | - |
| Phenolharz | 1,08 | 0,45 | - |
| PU-Harz | - | - | 1,00 |
| NBR-Kautschuk | - | 0,45 | - |
| Graphit | 2,70 | 1,80 | 2,00 |
| Bornitrid | 1,35 | 0,90 | 1,00 |
| Lösemittel | 8,26 | 5,50 | 6,00 |
| Verhältnis Schmierst.: Bindemittel | 1,5:1 | 1,5:1 | 3:1 |
| Lösemittelanteil Gew. % | 55 | 55 | 40 |

Aus den in der Tabelle für die Beispiele 1 bis 3 angegebenen Rezepturen wurden Beschichtemassen hergestellt und auf eine Metalloberfläche mit einer Oberflächenrauigkeits-RZ von ca. 25 µm mit einer Schichtdicke von 20 µm aufgetragen.

Die nachfolgenden Tests, bei denen die Leckageraten bestimmt wurden, wurden bei einem Überdruck von 0,3 bar durchgeführt.

Bei der Verwendung der unbeschichteten Metallbleche ergab sich nach dem Testlauf im Abgasstrang bei Temperaturen bei ca. 950°C (Dauer: 100 h) eine Leckagerate von 300 µl/min.

Im Falle der Verwendung der erfindungsgemäßen Beschichtemasse mit einer Beschichtungsdicke von 20 µm wurde nach dem Testlauf, der unter den gleichen Bedingungen wie bei der unbeschichteten Metalloberfläche durchgeführt wurde, eine Leckagerate von 18 µl/min; vor dem Lauf eine Leckagerate von 10 µl/min erreicht.

Aus diesen Zahlen wird ersichtlich, dass das thermische Zersetzen der Bindemittel Anteile in der erfindungsgemäßen Beschichtemassezusammensetzung nur geringen Einfluss auf die Leckagerate nimmt und insbesondere auch im Dauerbetrieb Leckageraten weit unter den sonst üblichen Werten erzielt.

## Patentansprüche

1. Verwendung einer Beschichtemasse, umfassend ein filmbildendes Bindemittel, ein Lösemittel hierfür und einen hochtemperaturfesten Festschmierstoff, zur Herstellung hochtemperaturtester Dichtungselemente, bei denen das Bindemittel thermisch zersetzt wird.

2. Verwendung nach Anspruch 1, **dadurch gekennzeichnet, dass** der Festschmierstoff ausgewählt ist aus Graphit, Bornitirid oder Mischungen dieser Stoffe.

3. Verwendung nach Anspruch 1 oder 2, **dadurch gekennzeichnet, dass** der Festschmierstoff in Partikelform granular oder lamellar vorliegt und die Festschmierstoffpartikel eine mittlere Partikelgröße von 0,5 bis 15 µm aufweisen.

4. Verwendung nach einem der Ansprüche 1 bis 3, **dadurch gekennzeichnet, dass** das Bindemittel mit einem Anteil von 50 Gew.% oder weniger der Feststoffanteile in der Beschichtemasse vorhanden ist.

5. Verwendung nach Anspruch 4, **dadurch gekennzeichnet, dass** das Massenverhältnis der Anteile von Festschmierstoff und Bindemittel im Bereich von 1:1 bis 3:1 liegt.

6. Verwendung nach einem der Ansprüche 1 bis 5, **dadurch gekennzeichnet, dass** das Bindemittel oberhalb von 700 °C thermisch zersetzbar ist.

7. Verwendung nach einem der Ansprüche 1 bis 6, **dadurch gekennzeichnet, dass** das Bindemittel beim Trocknen der Beschichtemasse einen elastischen Film bildenden Lack umfasst.

8. Verwendung nach einem der Ansprüche 1 bis 7, **dadurch gekennzeichnet, dass** der Lösemittelanteil an der Beschichtemasse 30 Gew.% oder mehr beträgt.

9. Verwendung nach einem der Ansprüche 1 bis 8, **dadurch gekennzeichnet, dass** die Beschichtemasse einen Anteil eines Elastomeren umfasst.

10. Verwendung nach Anspruch 9, **dadurch gekennzeichnet, dass** der Elastomeranteil in der Beschichtemasse 5 bis 15 Gew.% beträgt, bezogen auf die Summe der Anteile von Bindemittel und Festschmierstoff.

11. Verwendung nach einem der Ansprüche 1 bis 10 zur Herstellung von Dichtungselementen auf Oberflächen von Metallblechen.

12. Verwendung nach Anspruch 11, **dadurch gekennzeichnet, dass** die Metallbleche nachfolgend zur Herstellung der Dichtungselemente punktgeschweißt werden.

13. Ein- oder mehrlagige Metalllagendichtung mit einem oder mehreren Dichtungselementen, welche auf einer der Oberflächen einer der Metalllagen aus einer Beschichtemasse hergestellt sind, welche ein filmbildendes Bindemittel, ein Lösemittel hierfür und einen hochtemperaturfesten Festschmierstoff umfasst, wobei in den Dichtungselementen das Bindemittel thermisch zersetzt ist.

14. Ein- oder mehrlagige Metalllagendichtung nach Anspruch 13, **dadurch gekennzeichnet, dass** der Festschmierstoff ausgewählt ist aus Graphit, Bornitrid oder Mischungen dieser Stoffe.

15. Ein- oder mehrlagige Metalllagendichtung nach Anspruch 13 oder 14, **dadurch gekennzeichnet, dass** der Festschmierstoff in Partikelform granular oder lamellar vorliegt und die Festschmierstoffpartikel eine mittlere Partikelgröße von 0,5 bis 15 µm aufweisen.

16. Ein- oder mehrlagige Metalllagendichtung nach einem der Ansprüche 13 bis 15, **dadurch gekennzeichnet, dass** das Bindemittel mit einem Anteil von 50 Gew.% oder weniger der Feststoffanteile in der Beschichtemasse vorhanden ist.

17. Ein- oder mehrlagige Metalllagendichtung nach Anspruch 16, **dadurch gekennzeichnet, dass** das Massenverhältnis der Anteile von Festschmierstoff und Bindemittel im Bereich von 1:1 bis 3:1 liegt.

18. Ein- oder mehrlagige Metalllagendichtung nach einem der Ansprüche 13 bis 17, **dadurch gekennzeichnet, dass** das Bindemittel oberhalb von 700 °C thermisch zersetzbar ist.

19. Ein- oder mehrlagige Metalllagendichtung nach einem der Ansprüche 13 bis 18, **dadurch gekennzeichnet, dass** das Bindemittel beim Trocknen der Beschichtemasse einen elastischen Film bildenden Lack umfasst.

20. Ein- oder mehrlagige Metalllagendichtung nach einem der Ansprüche 13 bis 19, **dadurch gekennzeichnet, dass** der Lösemittelanteil an der Beschichtemasse 30 Gew.% oder mehr beträgt.

21. Ein- oder mehrlagige Metalllagendichtung nach einem der Ansprüche 13 bis 20, **dadurch gekennzeichnet, dass** die Beschichtemasse einen Anteil eines Elastomeren umfasst.

22. Ein- oder mehrlagige Metalllagendichtung nach Anspruch 21, **dadurch gekennzeichnet, dass** der Elastomeranteil in der Beschichtemasse 5 bis 15 Gew.% beträgt, bezogen auf die Summe der Anteile von Bindemittel und Festschmierstoff.

23. Ein- oder mehrlagige Metalllagendichtung nach einem der Ansprüche 13 bis 22, **dadurch gekennzeichnet, dass** das Bindemittel thermisch zersetzt ist.

## Claims

1. Use of a coating material comprising a film-forming binding agent, a solvent therefor and a high temperature resistant solid lubricant for making high temperature resistant sealing elements, in which the binding agent is thermally decomposed.

2. The use according to claim 1, **characterised in that** the solid lubricant is selected from graphite, boron nitride or mixtures of these materials.

3. The use according to claim 1 or 2, **characterised in that** the solid lubricant is in particle form, granular or lamellar, and the solid lubricant particles have a mean particle size of 0.5 to 15 µm.

4. The use according to any of claims 1 to 3, **characterised in that** the binding agent is present in the coating material in a content of 50% or less by weight of the solids content.

5. The use according to claim 4, **characterised in that** the mass ratio of the solid lubricant and binding agent contents is within the range of 1:1 to 3:1.

6. The use according to any of claims 1 to 5, **characterised in that** the binding agent can be thermally decomposed above 700°C.

7. The use according to any of claims 1 to 6, **characterised in that** the binding agent includes a lacquer which forms an elastic film during the drying of the coating material.

8. The use according to any of claims 1 to 7, **characterised in that** the solvent content of the coating material is 30% or more by weight.

9. The use according to any of claims 1 to 8, **characterised in that** the coating material contains a proportion of an elastomer.

10. The use according to claim 9, **characterised in that** the elastomer content of the coating material is 5 to 15% by weight relative to the total contents of binding agent and solid lubricant.

11. The use according to any of claims 1 to 10 for making sealing elements on surfaces of metal sheets.

12. The use according to claim 11, **characterised in that** the metal sheets are subsequently spot welded to make the sealing elements.

13. A single or multi-layer metal layer seal with one or more sealing elements, which are made on one of the surfaces of one of the metal layers, from a coating material comprising a film-forming binding agent, a solvent therefor and a high temperature resistant solid lubricant, wherein in the sealing elements the binding agent is thermally decomposed.

14. A single or multi-layer metal layer seal according to claim 13, **characterised in that** the solid lubricant is selected from graphite, boron nitride or mixtures of these materials.

15. A single or multi-layer metal layer seal according to claim 13 or 14, **characterised in that** the solid lubricant is in particle form, granular or lamellar, and the solid lubricant particles have a mean particle size of 0.5 to 15 µm.

16. A single or multi-layer metal layer seal according to any of claims 13 to 15, **characterised in that** the binding agent is present in the coating material in a content of 50% or less by weight of the solids content.

17. A single or multi-layer metal layer seal according to claim 16, **characterised in that** the mass ratio of the solid lubricant and binding agent contents is within the range of 1:1 to 3:1.

18. A single or multi-layer metal layer seal according to any of claims 13 to 17, **characterised in that** the binding agent can be thermally decomposed above 700°C.

19. A single or multi-layer metal layer seal according to any of claims 13 to 18, **characterised in that** the binding agent includes a lacquer which forms an elastic film during the drying of the coating material.

20. A single or multi-layer metal layer seal according to any of claims 13 to 19, **characterised in that** the solvent content of the coating material is 30% or more by weight.

21. A single or multi-layer metal layer seal according to any of claims 13 to 20, **characterised in that** the coating material contains a proportion of an elastomer.

22. A single or multi-layer metal layer seal according to claim 21, **characterised in that** the elastomer content of the coating material is 5 to 15% by weight relative to the total contents of binding agent and solid lubricant.

23. A single or multi-layer metal layer seal according to any of claims 13 to 22, **characterised in that** the binding agent is thermally decomposed.

## Revendications

1. Utilisation d'une masse de revêtement comprenant un liant filmogène, un solvant pour lui et un lubrifiant solide résistant aux hautes températures, pour la production d'éléments d'étanchéité résistant aux hautes températures, dans lesquels le liant est décomposé thermiquement.

2. Utilisation selon la revendication 1 **caractérisée en ce que** le lubrifiant solide est choisi parmi le graphite, le nitrure de bore ou les mélanges de ces substances.

3. Utilisation selon la revendication 1 ou 2 **caractérisée en ce que** le lubrifiant solide est granulaire ou lamellaire sous forme de particules et les particules de lubrifiant solide présentent une taille moyenne de particule de 0,5 à 15 µm.

4. Utilisation selon l'une des revendications 1 à 3 **caractérisée en ce que** le liant est présent en une fraction de 50 % en masse ou moins des fractions de solides dans la masse de revêtement.

5. Utilisation selon la revendication 4 **caractérisée en ce que** le rapport massique des fractions de lubrifiant solide et de liant est situé dans la plage de 1 : 1 à 3 : 1.

6. Utilisation selon l'une des revendications 1 à 5 **caractérisée en ce que** le liant est décomposable thermiquement au-delà de 700°C.

7. Utilisation selon l'une des revendications 1 à 6 **caractérisée en ce que** le liant comprend au séchage de la masse de revêtement une laque filmogène élastique.

8. Utilisation selon l'une des revendications 1 à 7 **caractérisée en ce que** la fraction de solvant par rapport à la masse de revêtement est 30% en masse ou plus.

9. Utilisation selon l'une des revendications 1 à 8 **caractérisée en ce que** la masse de revêtement comprend une fraction d'un élastomère.

10. Utilisation selon la revendication 9 **caractérisée en ce que** la fraction d'élastomère dans la masse de revêtement est 5 à 15 % en masse, par rapport à la somme des fractions de liant et de lubrifiant solide.

11. Utilisation selon l'une des revendications 1 à 10 pour la production d'éléments d'étanchéité sur des surfaces de tôles métalliques.

12. Utilisation selon la revendication 11 **caractérisée en ce que** les tôles métalliques sont ensuite soudées par points pour la production des éléments d'étanchéité.

13. Garniture d'étanchéité à couches métalliques à une ou plusieurs couches avec un ou plusieurs éléments d'étanchéité qui sont produits sur l'une des surfaces de l'une des couches métalliques à partir d'une masse de revêtement qui comprend un liant filmogène, un solvant pour lui et un lubrifiant solide résistant aux hautes températures, où le liant est décomposé thermiquement dans les éléments d'étanchéité.

14. Garniture d'étanchéité à couches métalliques à une ou plusieurs couches selon la revendication 13 **caractérisée en ce que** le lubrifiant solide est choisi parmi le graphite, le nitrure de bore ou les mélanges de ces substances.

15. Garniture d'étanchéité à couches métalliques à une ou plusieurs couches selon la revendication 13 ou 14 **caractérisée en ce que** le lubrifiant solide est granulaire ou lamellaire sous forme de particules et les particules de lubrifiant solide présentent une taille moyenne de particule de 0,5 à 15 µm.

16. Garniture d'étanchéité à couches métalliques à une ou plusieurs couches selon l'une des revendications 13 à 15 **caractérisée en ce que** le liant est présent en une fraction de 50 % en masse ou moins des fractions de solides dans la masse de revêtement.

17. Garniture d'étanchéité à couches métalliques à une ou plusieurs couches selon la revendication 16 **caractérisée en ce que** le rapport massique des fractions de lubrifiant solide et de liant est situé dans la plage de 1 : 1 à 3 : 1.

18. Garniture d'étanchéité à couches métalliques à une ou plusieurs couches selon l'une des revendications 13 à 17 **caractérisée en ce que** le liant est décomposable thermiquement au-delà de 700°C.

19. Garniture d'étanchéité à couches métalliques à une ou plusieurs couches selon l'une des revendications 13 à 18 **caractérisée en ce que** le liant comprend au séchage de la masse de revêtement une laque filmogène élastique.

20. Garniture d'étanchéité à couches métalliques à une ou plusieurs couches selon l'une des revendications 13 à 19 **caractérisée en ce que** la fraction de solvant par rapport à la masse de revêtement est 30% en masse ou plus.

21. Garniture d'étanchéité à couches métalliques à une ou plusieurs couches selon l'une des revendications 13 à 20 **caractérisée en ce que** la masse de revêtement comprend une fraction d'un élastomère.

22. Garniture d'étanchéité à couches métalliques à une ou plusieurs couches selon la revendication 21 **caractérisée en ce que** la fraction d'élastomère dans la masse de revêtement est 5 à 15 % en masse, par rapport à la somme des fractions de liant et de lubrifiant solide.

23. Garniture d'étanchéité à couches métalliques à une ou plusieurs couches selon l'une des revendications 13 à 22 **caractérisée en ce que** le liant est décomposé thermiquement.
